# EUROPEAN PATENT APPLICATION

(11) **EP 4 718 538 A1**
(43) Date of publication of application: **01.04.2026**
(21) Application number: 24830778.7
(22) Date of filing: 25.06.2024
(51) Int. Cl.: H01M 4/58, H01M 4/62, H01M 10/054

(54) **COMPOSITE POSITIVE ELECTRODE MATERIAL, PREPARATION METHOD THEREFOR AND USE THEREOF**

(30) Priority: 29.06.2023 CN 202310793176
(71) Applicant: Ningbo Ronbay New Energy Technology Co., Ltd., Yuyao Ningbo, Zhejiang 315402 (CN)
(72) Inventor: WANG, Xueying, Ningbo, Zhejiang 315402 (CN); YAN, Xufeng, Ningbo, Zhejiang 315402 (CN); LIU, Rui, Ningbo, Zhejiang 315402 (CN)
(74) Representative: Bandpay & Greuter
(86) International application number: PCT/CN2024/101442
(87) International publication number: WO 2025/002138

(57) **Abstract**

A composite positive electrode material, a preparation method thereof and a use thereof, where the composite positive electrode material includes an inner core and a carbon coating layer covering at least part of a surface of the inner core and/or embedded in the inner core; the inner core includes NaFePO₄ and a compound represented by Formula 1; Na₄₊ₓFe_{3-y}(PO₄)_{2+z}P₂O₇ Formula 1; in Formula 1, - 0.15≤x≤0.8, 0≤y≤0.5, and -0.2≤z≤0.2; and a particle size of NaFePO₄ is ≤ 100 nm. The composite positive electrode material, when used in batteries, can improve the capacity and rate capability of the batteries.

## Description

The present application claims priority to Chinese Patent Application No. 202310793176.6 filed with China National Intellectual Property Administration on June 29, 2023, entitled "Composite Positive Electrode Material, Preparation Method Thereof and Use Thereof", which is hereby incorporated by reference in its entirety.

### TECHNICAL FIELD

Embodiments of the present application relate to a composite positive electrode material, a preparation method thereof and a use thereof, belonging to the technical field of secondary batteries.

### BACKGROUND

Compared with lithium resources, sodium resources are abundant and low-cost, and thus the industry is increasingly inclined to research sodium-ion batteries. Sodium iron phosphate-pyrophosphate is considered one of the most industrially promising positive electrode materials for sodium-ion batteries due to its low cost and excellent structural stability. However, NFPP has low electronic conductivity. To improve the electronic conductivity of NFPP, existing technologies mainly employ carbon coating on NFPP. Nevertheless, at present, the composite positive electrode materials with carbon-coated NFPP still have the problems of low capacity and poor rate capability.

### SUMMARY

The present application provides a composite positive electrode material, which, when used in batteries, can improve the capacity and rate capability of the batteries.

The present application provides a preparation method of a composite positive electrode material, which preparation method may prepare the above composite positive electrode material, has a simple preparation process, and is suitable for wide popularization and application.

The present application provides a battery, which includes the above composite positive electrode material, and thus has excellent rate capability, cycling performance, and discharge specific capacity.

The present application provides a composite positive electrode material, including an inner core and a carbon coating layer covering at least part of a surface of the inner core and/or embedded in the inner core; where
the inner core includes NaFePO₄ and a compound represented by Formula 1;

   Na₄₊ₓFe_{3-y}(PO₄)_{2+z}P₂O₇ Formula 1;
in Formula 1, -0.15≤x≤0.8, 0≤y≤0.5, -0.2≤z≤0.2; and
a particle size of NaFePO₄ is ≤ 100 nm.
In the composite positive electrode material as described above, an atomic ratio of Fe to P in the composite positive electrode material gradually decreases from (0.9-1.1):1 from outside to inside and then stabilizes at (0.65-0.85): 1; and/or,
an atomic ratio of Fe to Na in the composite positive electrode material gradually decreases from (0.9-1.1):1 from outside to inside and then stabilizes at (0.65-0.85):1.

In the composite positive electrode material as described above, based on a total mass of the composite positive electrode material, a mass percentage content of the carbon coating layer is 0.5-5%.

In the composite positive electrode material as described above, a molar ratio of PO₄³⁻ to P₂O₇⁴⁻ is (1.5-3):1.

In the composite positive electrode material as described above, a particle size of the inner core is 100-900 nm.

In the composite positive electrode material as described above, a specific surface area of the composite positive electrode material is 5-20 m² g⁻¹.

In the composite positive electrode material as described above, a compaction density of the composite positive electrode material is 1.9-2.4 g cm⁻³.

The present application provides a preparation method of the composite positive electrode material as described above, including:
performing a sand milling treatment and a spray drying treatment in sequence on a raw material system including a sodium source, an iron source, a phosphorus source and a carbon source, to obtain a powder; and
performing a first calcination treatment, a second calcination treatment, a third calcination treatment and a fourth calcination treatment on the powder in sequence, to obtain the composite positive electrode material;
where in the raw material system, a molar proportion a of sodium element, a molar proportion b of iron element, and a molar proportion c of phosphorus element satisfy: 3.85≤a≤4.8; 2.5≤b≤3; and 3.8≤c≤4.2;
in the first calcination treatment, a temperature is 255-260°C and a time is 1-2 h;
in the second calcination treatment, a temperature is 300-320°C and a time is 3-5 h;
in the third calcination treatment, a temperature is 370-390°C and a time is 1-2 h; and
in the fourth calcination treatment, a temperature is 470-500°C and a time is 8-10 h.

In the preparation method as described above, the sodium source and the iron source are simultaneously sodium ferric ethylenediaminetetraacetate (Sodium Ferric EDTA).

In the preparation method as described above, the sand milling treatment includes a first sand milling treatment and a second sand milling treatment;
a particle size of a sand milling agent in the second sand milling treatment is smaller than a particle size of a sand milling agent in the first sand milling treatment.

In the preparation method as described above, in the first sand milling treatment, a rotational speed is 900-1200 rpm and a time is 2-3 h; and/or,
in the second sand milling treatment, a rotational speed is 400-2000 rpm and a time is 1-2 h.

In the preparation method as described above, the carbon source includes an organic carbon source.

In the preparation method as described above, the carbon source further includes an inorganic carbon source; and
a mass ratio of the organic carbon source to the inorganic carbon source is (12.5-30):1.

In the preparation method as described above, the raw material system further includes a coupling agent;
based on a total mass of the raw material system, a mass percentage content of the coupling agent is 1-3%; and
preferably, the coupling agent is a titanic acid ester coupling agent.

The present application provides a battery, including the composite positive electrode material as described above.

The composite positive electrode material of the present application includes an inner core formed by a compound represented by Formula 1 and NaFePO₄ with a specific particle size, and a carbon coating layer covering at least part of a surface of the inner core; the composite positive electrode material with a specific composition of the present application has excellent discharge capacity, cycling performance and rate capability.

The preparation method of the composite positive electrode material of the present application may prepare the foregoing composite positive electrode material, and the preparation method has simple operation and is suitable for widespread application.

The battery of the present application, since including the foregoing composite positive electrode material, has excellent cycling performance, discharge specific capacity and rate capability.

### BRIEF DESCRIPTION OF DRAWINGS

To describe the technical solutions in embodiments of the present application or in the prior art more clearly, the following briefly introduces the accompanying drawings needed for describing the embodiments of the present application or the prior art. Apparently, the accompanying drawings in the following description illustrate merely some embodiments of the present application, and persons of ordinary skill in the art may still derive other drawings from these accompanying drawings without creative effort.
FIG. 1 is an XRD pattern of a composite positive electrode material in Example 1 of the present application.
FIG. 2 is an XRD pattern of a composite positive electrode material in Example 2 of the present application.
FIG. 3 is an XRD pattern of a composite positive electrode material in Example 3 of the present application.
FIG. 4 is an XRD pattern of a composite positive electrode material in Comparative Example 1 of the present application.
FIG. 5 is a SEM image of the composite positive electrode material in Example 1 of the present application.
FIG. 6 is a SEM image of the composite positive electrode material in Example 2 of the present application.
FIG. 7 is a SEM image of the composite positive electrode material in Example 3 of the present application.
FIG. 8 is a SEM image of the composite positive electrode material in Comparative Example 1 of the present application.
FIG. 9 is a charge-discharge curve of a battery in Example 1 of the present application.
FIG. 10 is a charge-discharge curve of a battery in Example 2 of the present application.
FIG. 11 is a charge-discharge curve of a battery in Example 3 of the present application.
FIG. 12 is a charge-discharge curve of a battery in Comparative Example 1 of the present application.

### DESCRIPTION OF EMBODIMENTS

To make the objectives, technical solutions, and advantages of the present application clearer, the following clearly and comprehensively describes the technical solutions in embodiments of the present application with reference to the embodiments of the present application. Apparently, the described embodiments are merely some rather than all of embodiments of the present application. All other embodiments obtained by persons of ordinary skill in the art based on embodiments of the present application without creative effort shall fall within the protection scope of the present application.

A first aspect of the present application provides a composite positive electrode material, including an inner core and a carbon coating layer covering at least part of a surface of the inner core and/or embedded in the inner core;
the inner core includes NaFePO₄ and a compound represented by Formula 1;

   Na₄₊ₓFe_{3-y}(PO₄)_{2+z}P₂O₇ Formula 1;
in Formula 1, -0.15≤x≤0.8, 0≤y≤0.5, -0.2≤z≤0.2; and
a particle size of NaFePO₄ is ≤ 100 nm.

It should be understood that the carbon coating layer of the present application may cover the entire surface of the inner core, or cover a part of the surface of the inner core, and also the carbon coating layer may be embedded in inner the core.

The composite positive electrode material of the present application includes the inner core and the carbon coating layer from inside to outside.

The inner core includes NaFePO₄ with a particle size of ≤100 nm and a compound represented by Formula 1, where the particle size of NaFePO₄ refers to an average particle size of NaFePO₄; NaFePO₄ with a particle size of ≤100 nm is transformed into amorphous FePO₄ during charge-discharge processes of the battery, thereby effectively utilizing the capacity of NaFePO₄ and improving the capacity of the composite positive electrode material; the compound represented by Formula 1 may be Na₄Fe₃(PO₄)₂P₂O₇, which has excellent stability and contributes to improving the cycling performance of the composite positive electrode material. The carbon coating layer can improve the electron transport capability of the composite positive electrode material and greatly enhance the electrical conductivity of the composite positive electrode material. Therefore, the composite positive electrode material of the present application has excellent capacity, cycling performance and rate capability.

By performing a XPS test on the composite positive electrode material of the present application, it can be found that, the composite positive electrode material of the present application has a gradually decreasing signal of carbon atom from outside to inside, indicating that the carbon coating layer of the present application is located on an outer surface of the composite positive electrode material.

In some embodiments of the present application, an atomic ratio of Fe to P in the composite positive electrode material gradually decreases from (0.9-1.1):1 from outside to inside and then stabilizes at (0.65-0.85):1; and/or,
an atomic ratio of Fe to Na in the composite positive electrode material gradually decreases from (0.9-1.1):1 from outside to inside, and then stabilizes at (0.65-0.85):1, indicating that NaFePO₄ in the inner core is closer to the outer surface of the composite positive electrode material.

In the present application, the atomic ratio of Fe to P or Fe to Na in the composite positive electrode material may be detected by a detection method commonly used in the art. For example, the atomic ratio of Fe to P or Fe to Na in the composite positive electrode material may be detected by XPS or SEM-EDS.

In the present application, a mass percentage content of the carbon coating layer in the composite positive electrode material may be specifically selected to further improve the rate capability of the composite positive electrode material while ensuring the capacity and cycling performance of the composite positive electrode material. In some embodiments of the present application, based on a total mass of the composite positive electrode material, a mass percentage content of the carbon coating layer is 0.5-5%.

In some embodiments of the present application, in the composite positive electrode material, a content ratio of PO₄³⁻ to P₂O₇⁴⁻ is (1.5-3):1.

It should be understood that, in the present application, P₂O₇³⁻ is derived from the compound represented by Formula 1, and PO₄³⁻ is partially derived from the compound represented by Formula 1 and partially derived from NaFePO₄. When the content ratio of PO₄³⁻ to P₂O₇⁴⁻ is (1.5-3):1, the advantages of the compound represented by Formula 1 and NaFePO₄ can be better exerted, further improving the cycling performance and capacity of the composite positive electrode material.

In the present application, a spectrophotometer may be used to determine the contents of PO₄³⁻ and P₂O₇⁴⁻ in the composite positive electrode material.

In some embodiments of the present application, a particle size of the inner core is 100-900 nm.

The primary particles of the composite positive electrode material of the present application are spherical or cake-shaped. And through HRTEM, it can be observed that any two composite positive electrode material particles are interconnected via the carbon coating layer.

In the present application, the particle size of the inner core refers to an average particle size of the inner core. In the composite positive electrode material of the present application, the inner cores with a particle size of 100-900 nm are interconnected via the carbon coating layer; electrons and ions are transported through the carbon coating layer, contributing to improving the specific capacity and rate capability of the composite positive electrode material. When the particle size of the inner core is 100-900 nm, the composite positive electrode material may have a low specific surface area, which may prevent the slurry from formation of jelly during preparation of a positive electrode sheet, improving the coating effect of the positive electrode sheet, and further enhancing the industrial application prospects of the composite positive electrode material.

In some embodiments, a surface contact angle of the composite positive electrode material of the present application is 35-60°.

In some embodiments, there is no obvious porous structure on the surface of the inner core, which helps to further reduce the specific surface area of the composite positive electrode material. In some embodiments of the present application, when the specific surface area of the composite positive electrode material is 5-20 m² g⁻¹, the composite positive electrode material can further avoid formation of jelly from the slurry during preparation of the positive electrode sheet, improving the coating effect of the positive electrode sheet.

In some embodiments of the present application, when a compaction density of the composite positive electrode material is 1.9-2.4 g cm⁻³, it helps to increase the compaction density of the positive electrode sheet, thereby improving the capacity of the positive electrode sheet. In some embodiments, the composite positive electrode material of the present application may be used to prepare a positive electrode sheet with a compaction density of 2.2-2.6 g cm⁻³, and a battery including the positive electrode sheet has excellent volumetric specific energy.

A second aspect of the present application provides a preparation method of the composite positive electrode material as described above, including:
performing a sand milling treatment and a spray drying treatment in sequence on a raw material system including a sodium source, an iron source, a phosphorus source and a carbon source, to obtain a powder; and
performing a first calcination treatment, a second calcination treatment, a third calcination treatment and a fourth calcination treatment on the powder, to obtain the composite positive electrode material;
where, in the raw material system, a molar proportion a of sodium element, a molar proportion b of iron element, and a molar proportion c of phosphorus element satisfy: 3.85≤a≤4.8; 2.5≤b≤3; and 3.8≤c≤4.2;
in the first calcination treatment, a temperature is 255-260°C and a time is 1-2 h;
in the second calcination treatment, a temperature is 300-320°C and a time is 3-5 h;
in the third calcination treatment, a temperature is 370-390°C and a time is 1-2 h; and
in the fourth calcination treatment, a temperature is 470-500°C and a time is 8-10 h.

The present application subjects a raw material system including a sodium source, an iron source, a phosphorus source and a carbon source with specific contents to a sand milling treatment, so that the sodium source, the iron source, the phosphorus source and the carbon source are uniformly mixed to obtain a uniform suspension; then subjects the suspension to a spray drying treatment, to evaporate water in the suspension, thereby obtaining a powder; and
the powder is subjected to a first calcination treatment at 255-260°C for 1-2 h; the temperature is raised to 300-320°C to perform a second calcination treatment for 3-5 h; the temperature is raised to 370-390°C to perform a third calcination treatment for 1-2 h; then the temperature is raised to 470-500°C to perform a fourth calcination treatment for 8-10 h, thereby forming the composite positive electrode material with a core-shell structure in the present application.

It should be understood that the raw material system of the present application further includes water, and the present application does not limit water content in the raw material system. In some embodiments, when a mass ratio of a total mass of the sodium source, the iron source, the phosphorus source and the carbon source (solid phase) to water (liquid phase) is (0.2-0.4):1, and a Dv50 of the solid phase in the raw material system is 100-1000 nm, it helps to improve a yield of the powder. In specific embodiments, the water may be ultrapure water.

It should be understood that in the sand milling treatment, a portion of the solid phase dissolves in water, and another portion of the solid phase forms a suspended matter in water. The inventors have found in research that when the content of the suspended matter in the suspension increases, it helps to improve the yield of the powder, reduce raw material loss during spray drying, and reduce raw material cost. In some embodiments, when a mass percentage content of the suspended matter in the suspension obtained after the sand milling treatment is 35-75%, the yield of the powder can be improved.

The present application does not particularly limit the spray drying treatment, as long as the suspension can be dried to form the powder. In some embodiments, a spray dryer may be used to perform the spray drying treatment, and a fan temperature of the spray dryer may be 180-240°C, and an outlet temperature may be 80-100°C.

The yield of the powder obtained by the preparation method of the present application may be 70-97%, which helps to improve the yield of the composite positive electrode material.

In some embodiments, the powder may be subjected to a crushing treatment and a sieving treatment sequentially, where a mesh size of the sieving treatment may be 250-350 mesh, so as to further improve the effect of the subsequent calcination treatment, thereby obtaining the composite positive electrode material with excellent performance.

The present application does not particularly limit specific methods of the first calcination treatment, the second calcination treatment, the third calcination treatment and the fourth calcination treatment, as long as the temperature and time comply with the above ranges. In some embodiments, the first calcination treatment, the second calcination treatment, the third calcination treatment and the fourth calcination treatment may be performed in a calcination atmosphere, and the calcination atmosphere may be a nitrogen atmosphere or a nitrogen-hydrogen mixed atmosphere. When the calcination atmosphere is a nitrogen-hydrogen mixed atmosphere, a volume ratio of nitrogen to hydrogen may be 95:5. In some embodiments, a flow rate of the calcination atmosphere may be set to 0.3-0.5 L/min, so as to further improve the effect of the calcination treatment and obtain the composite positive electrode material with excellent performance.

In the present application, a heating rate of the first calcination treatment, the second calcination treatment, the third calcination treatment and the fourth calcination treatment may be set to 3°C/min, so as to ensure that various raw materials can fully react, to improve the graphitization degree of the carbon material, and thus improve the comprehensive performance of the composite positive electrode material.

The preparation method of the composite positive electrode material of the present application may prepare the foregoing composite positive electrode material, and the preparation method has a simple operation and is suitable for widespread application.

The present application does not particularly limit the sand milling treatment, as long as the raw material system can be uniformly mixed. In some embodiments of the present application, the sand milling treatment includes a first sand milling treatment and a second sand milling treatment; and
a particle size of a sand milling bead in the second sand milling treatment is smaller than a particle size of a sand milling bead in the first sand milling treatment.

The present application first uses sand milling beads with a larger particle size to perform the first sand milling treatment, then uses sand milling beads with a smaller particle size to perform the second sand milling treatment. This may help to improve the effect of the sand milling treatment, to obtain a uniformly mixed suspension, and thus helps to improve the comprehensive performance of the composite positive electrode material.

The sand milling treatment of the present application may be performed in a sand mill. Furthermore, the present application may further define specific processes of the first and second sand milling treatments, so as to further improve the comprehensive performance of the composite positive electrode material. In some embodiments of the present application, in the first sand milling treatment, a rotational speed is 900-1200 rpm and a time is 2-3 h; and/or,
in the second sand milling treatment, a rotational speed is 400-2000 rpm and a time is 1-2 h.

The present application does not particularly limit the sodium source, as long as it can provide sodium element; in some embodiments, the sodium source may be at least one selected from the group consisting of sodium dihydrogen phosphate dihydrate, sodium bicarbonate, sodium carbonate, sodium pyrophosphate decahydrate and sodium ferric ethylenediaminetetraacetate. The present application does not particularly limit the iron source, as long as it can provide iron element; in some embodiments, the iron source may be at least one selected from the group consisting of ferrous oxalate dihydrate, ferric pyrophosphate, ferric phosphate and sodium ferric ethylenediaminetetraacetate. The present application does not particularly limit the phosphorus source, as long as it can provide phosphorus element; in some embodiments, the phosphorus source may be at least one selected from the group consisting of sodium dihydrogen phosphate dihydrate, ferric phosphate, ferric pyrophosphate and sodium pyrophosphate decahydrate. It should be understood that when the raw material system includes sodium ferric ethylenediaminetetraacetate, nitrogen element, iron element and sodium element can be simultaneously introduced, which not only helps to simplify the preparation process but also may chelate iron atoms, achieving confinement of metal active centers (confining dissolution of variable-valence metals).

The carbon source in the present application may be an organic carbon source and/or an inorganic carbon source. In some embodiments of the present application, when the carbon source includes an organic carbon source, during the calcination treatment, molecules of the organic matter are carbonized to form a three-dimensional network for electron transport, enabling continuous electron transfer, which can greatly improve the conductivity of the composite positive electrode material.

The organic carbon source of the present application may be an organic carbon source commonly used in the art. Exemplarily, the organic carbon source may be at least one selected from the group consisting of polyethylene glycol, citric acid, glucose, sucrose, melamine and polyacrylamide.

In the present application, when the organic carbon source includes not only citric acid but also at least one selected from the group consisting of polyethylene glycol, glucose and sucrose, carboxyl and hydroxyl groups in citric acid can not only undergo esterification reaction to form a cross-linked framework, but also citric acid may closely bond with hydroxyl group of the at least one selected from the group consisting of polyethylene glycol, glucose and sucrose to form a precursor polymer. During subsequent calcination treatment, the precursor polymer will form a carbon skeleton, enabling uniform loading of the inner core in the carbon skeleton, thereby forming the composite positive electrode material with excellent performance.

In the present application, when the organic carbon source is selected from at least one of melamine and polyacrylamide, nitrogen atoms may also be introduced into the system to enhance specific capacity and rate capability of the composite positive electrode material.

In some embodiments of the present application, the carbon source may further include an inorganic carbon source; and
a mass ratio of the organic carbon source to the inorganic carbon source may be (12.5-30):1.

In the present application, when the carbon source further includes the inorganic carbon source, the inorganic carbon source will enter the inner core, the organic carbon source will form the carbon coating layer. The combined action of the inorganic carbon source and the organic carbon source may achieve rapid transfer of electrons or ions.

The present application does not particularly limit the inorganic carbon source, which may be a commonly used inorganic carbon source in the art. Exemplarily, the inorganic carbon source may be Ketjen black and/or carbon nanotubes.

In some embodiments, when the carbon source includes the organic carbon source and the inorganic carbon source, a coupling agent may be added. Based on a total mass of the raw material system, a mass percentage content of the coupling agent is 1-3%. In some embodiments, the coupling agent may be a titanic acid ester coupling agent.

When the raw material system further includes the coupling agent, the coupling agent may promote the reaction between the organic carbon source and the inorganic carbon source, thereby better achieving rapid transfer of electrons or ions and improving the electrochemical performance of the battery.

In the present application, a theoretical mass of NFPP may be calculated according to addition amounts of the sodium source, the iron source and the phosphorus source and their reaction equations. Based on the theoretical mass of NFPP, the content of the carbon source is determined. In some embodiments, an addition amount of the inorganic carbon source may be 0.5-2% of the theoretical mass of NFPP, and an addition amount of the organic carbon source may be 8-25% of the theoretical mass of NFPP.

A third aspect of the present application provides a battery, which includes the composite positive electrode material described above.

In the present application, a conductive agent, a binder, and the composite positive electrode material described above may be mixed to prepare a positive electrode slurry, and the positive electrode slurry is applied to at least one functional surface of a positive electrode current collector and then is dried, to form a positive electrode sheet.

In specific embodiments, the conductive agent may be acetylene black or conductive carbon black, the binder may be PVDF, and a mass ratio of the composite positive electrode material, the conductive agent and the binder is 8:1:1; the drying may be performed in a vacuum oven, and a drying time may be 2 h.

In some embodiments, the battery of the present application may be obtained by stacking the above-described positive electrode sheet, a separator and a negative positive sheet to form an electrode assembly, placing the electrode assembly in a package, and injecting an electrolyte into the package.

The battery of the present application, by including the above-described composite positive electrode material, exhibits excellent cycling performance, discharge specific capacity, and rate capability.

Hereinafter, the technical solutions of the present application will be further explained with reference to specific examples.

### Example 1

A battery of the present example was prepared by a method including the following steps:
1. Preparation of a composite positive electrode material
   1) 2 mol of sodium dihydrogen phosphate dihydrate and 1.5 mol of ferrous oxalate dihydrate were weighed, a theoretical mass of NFPP was calculated according to a reaction equation; then polyethylene glycol and melamine were added and dissolved together in 2 L of deionized water; a first sand milling treatment and a second sand milling treatment were performed sequentially using a sand mill to obtain a suspension; a spray drying treatment was performed on the suspension using a spray dryer to obtain a powder;
      where an addition amount of polyethylene glycol and melamine was 25% of the theoretical mass of NFPP, and a mass ratio of polyethylene glycol to melamine was 1:1;
      a particle size of a sand mill in the first sand milling treatment was larger than a particle size of a sand mill in the second sand milling treatment, and in the first sand milling treatment, a time was 3 h, and a rotational speed of the sand mill was 1000 rpm min⁻¹, and in the second sand milling treatment, a time was 1.5 h, and a rotational speed of the sand mill was 500 rpm min⁻¹;
      in the spray drying treatment, a fan temperature of the spray dryer was 210°C, and an outlet temperature was 85°C.
   2) The powder was placed in a tube furnace continuously and fully filled with nitrogen gas, to perform a first calcination treatment, a second calcination treatment, a third calcination treatment and a fourth calcination treatment sequentially; and after cooling, a composite positive electrode material was obtained;
      where a flow rate of the nitrogen gas was 0.3 L min⁻¹;
      in the first calcination treatment, a temperature was 255°C and held for 2 h;
      in the second calcination treatment, a temperature was 300°C and held for 5 h;
      in the third calcination treatment, a temperature was 370°C and held for 2 h; and
      in the fourth calcination treatment, a temperature was 470°C and held for 10 h.
2. Preparation of a battery

The composite positive electrode material, acetylene black, and binder PVDF were mixed at a mass ratio of 80:10:10 to form a positive electrode slurry, and the positive electrode slurry was applied onto both functional surfaces of an aluminum foil, dried and then baked in a vacuum oven for 2 h, to obtain a positive electrode sheet; and
the positive electrode sheet, a separator, and a metal sodium sheet as negative positive electrode were stacked in a glove box with water and oxygen contents both less than 0.001 ppm to form an electrode assembly, and the electrode assembly was placed in a package, and then an electrolyte was injected into the package, to obtain a CR 2032 button cell;
where the separator was a Celgard separator,
the electrolyte includes NaClO₄, EC, PC, and FEC, where a volume ratio of EC to PC was 1:1, a concentration of NaClO₄ was 0.8 mol/L, and a mass percentage content of FEC was 7.5%.

### Example 2

A preparation method of a battery in the present example is substantially the same as that in Example 1, with the differences being:
in a preparation of a composite positive electrode material,
0.6 mol of sodium pyrophosphate decahydrate, 0.6 mol of ferrous oxalate dihydrate, 1.47 mol of ferric phosphate, and 0.27 mol of sodium bicarbonate were weighed; a theoretical mass of NFPP was calculated according to a reaction equation; then polyethylene glycol and glucose were added;
where an addition amount of polyethylene glycol and glucose was 11.1% of the theoretical mass of NFPP, and a mass ratio of polyethylene glycol to glucose was 1:1.

### Example 3

A preparation method of a battery in the present example is substantially the same as that in Example 1, with the differences being:
in a preparation of a composite positive electrode material,
1 mol of sodium pyrophosphate decahydrate, 1 mol of ferrous oxalate dihydrate, and 2 mol of ferric phosphate were weighed; a theoretical mass of NFPP was calculated according to a reaction equation; then polyethylene glycol, Ketjen black, and a titanic acid ester coupling agent were added;
where an addition amount of polyethylene glycol was 25% of the theoretical mass of NFPP, an addition amount of Ketjen black was 1% of the theoretical mass of NFPP, and an addition amount of the titanic acid ester coupling agent was the same as that of Ketjen black.

### Example 4

A preparation method of a battery in the present example is substantially the same as that in Example 1, with the differences being:
in a preparation of a composite positive electrode material,
glucose was used to replace melamine, and addition amounts of glucose and polyethylene glycol were respectively 4% and 2% of the theoretical mass of NFPP.

### Example 5

A preparation method of a battery in the present example is substantially the same as that in Example 1, with the differences being:
in a preparation of a composite positive electrode material,
glucose was used to replace melamine, and addition amounts of glucose and polyethylene glycol were respectively 20% and 6% of the theoretical mass of NFPP.

### Example 6

A preparation method of a battery in the present example is substantially the same as that in Example 1, with the differences being:
in a preparation of a composite positive electrode material,
in the first calcination treatment, a temperature was 255°C and held for 2 h;
in the second calcination treatment, a temperature was 300°C and held for 4 h;
in the third calcination treatment, a temperature was 390°C and held for 2 h; and
in the fourth calcination treatment, a temperature was 500°C and held for 8 h.

### Example 7

A preparation method of a battery in the present example is substantially the same as that in Example 1, with the differences being:
in a preparation of a composite positive electrode material,
in the first calcination treatment, a temperature was 255°C and held for 2 h;
in the second calcination treatment, a temperature was 300°C and held for 4 h;
in the third calcination treatment, a temperature was 370°C and held for 1 h; and
in the fourth calcination treatment, a temperature was 470°C and held for 10 h.

### Example 8

A preparation method of a battery in the present example is substantially the same as that in Example 1, with the differences being:
in a preparation of a composite positive electrode material,
1 mol of sodium pyrophosphate decahydrate, 1.15 mol of ferrosoferric oxide, 2 mol of phosphoric acid, and 0.2 mol of sodium ferric ethylenediaminetetraacetate were weighed; a theoretical mass of NFPP was calculated according to a reaction equation; then glucose was added;
where considering the carbon source in sodium ferric ethylenediaminetetraacetate, glucose was used to replace melamine, and an addition amount of glucose was 7% of the theoretical mass of NFPP.

### Example 9

A preparation method of a battery in the present example is substantially the same as that in Example 1, with the differences being:
in a preparation of a composite positive electrode material,
only one sand milling treatment was performed, and the sand milling treatment time was 4 h, and the rotational speed of the sand mill was 800 rpm min⁻¹.

### Example 10

A preparation method of a battery in the present example is substantially the same as that in Example 3, with the differences being:
in a preparation of a composite positive electrode material,
the carbon source was glucose and acetylene black, where addition amounts of glucose and acetylene black were respectively 1% and 2% of the theoretical mass of NFPP.

### Comparative Example 1

A preparation method of a battery in the present comparative example is substantially the same as that in Example 1, with the differences being:
in a preparation of a composite positive electrode material, polyethylene glycol and melamine were not added.

### Comparative Example 2

A preparation method of a battery in the present comparative example is substantially the same as that in Example 1, with the differences being:
in step 1), an addition amount of polyethylene glycol and melamine was 18% of the theoretical mass of NFPP;
in step 2), the powder was placed in a tube furnace continuously and fully filled with nitrogen gas, to perform a first calcination treatment, a second calcination treatment, and a third calcination treatment sequentially; and after cooling, a composite positive electrode material was obtained;
where a flow rate of the nitrogen gas was 0.3 L min⁻¹;
in the first calcination treatment, a temperature was 255°C and held for 2 h;
in the second calcination treatment, a temperature was 390°C and held for 5 h; and
in the third calcination treatment, a temperature was 530°C and held for 15 h.

### Performance Test

1. The following performance tests were performed on the composite positive electrode materials in Examples and Comparative Examples, and test results are shown in Table 1.

### 1) XRD Test

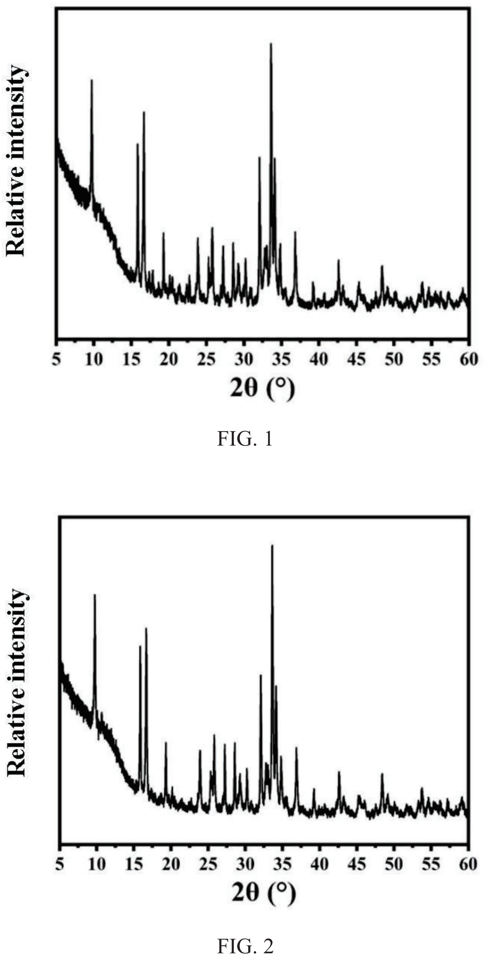

XRD tests were performed on the composite positive electrode materials in Examples and Comparative Examples. The test results are shown in FIGS. 1-4.

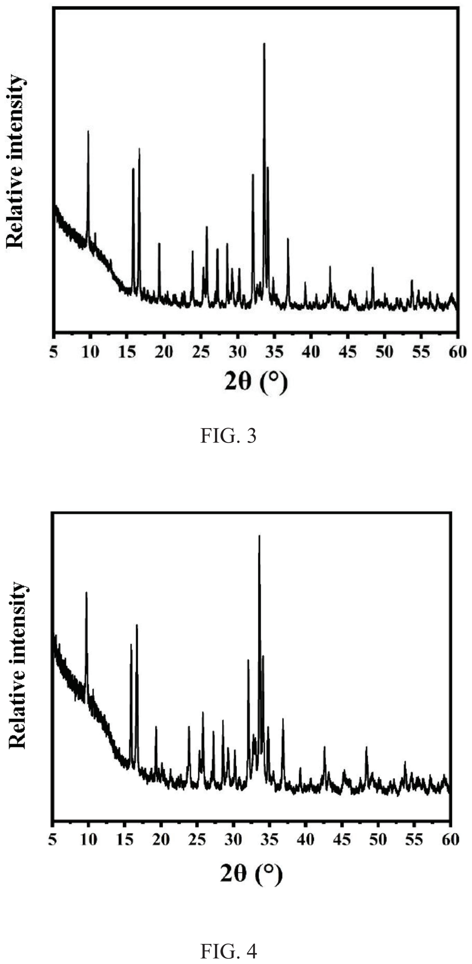

FIG. 1 is an XRD pattern of the composite positive electrode material in Example 1 of the present application; FIG. 2 is an XRD pattern of the composite positive electrode material in Example 2 of the present invention; FIG. 3 is an XRD pattern of the composite positive electrode material in Example 3 of the present invention; and FIG. 4 is an XRD pattern of the composite positive electrode material in Comparative Example 1 of the present application. As can be seen from FIGS. 1-4, the samples of the composite positive electrode materials in the examples and comparative examples of the present application exhibited good crystallinity, with no obvious impurity peaks other than NFPP (Na₄₊ₓFe_{3-y}(PO₄)_{2+z}P₂O₇) and NFP (NaFePO₄).

Rietveld refinement was performed on the patterns to obtain a ratio of NFPP to NFP in the composite positive electrode materials. The grain sizes of different phases were calculated using the Scherrer formula based on independent three strong peaks of NFPP and NFP.

### 2) SEM Test

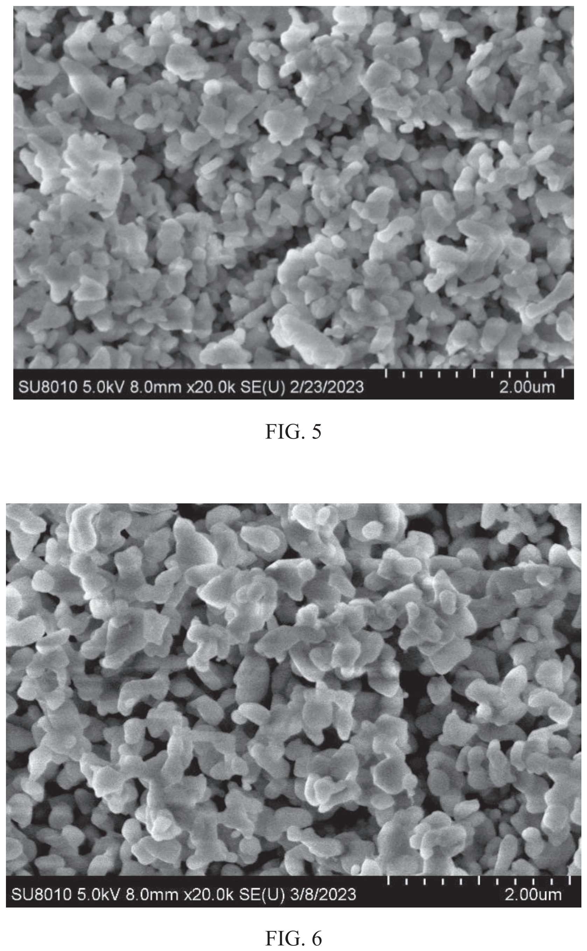

SEM tests were performed on the composite positive electrode materials in the examples and comparative examples, respectively. The test results are shown in FIGS. 5-8.

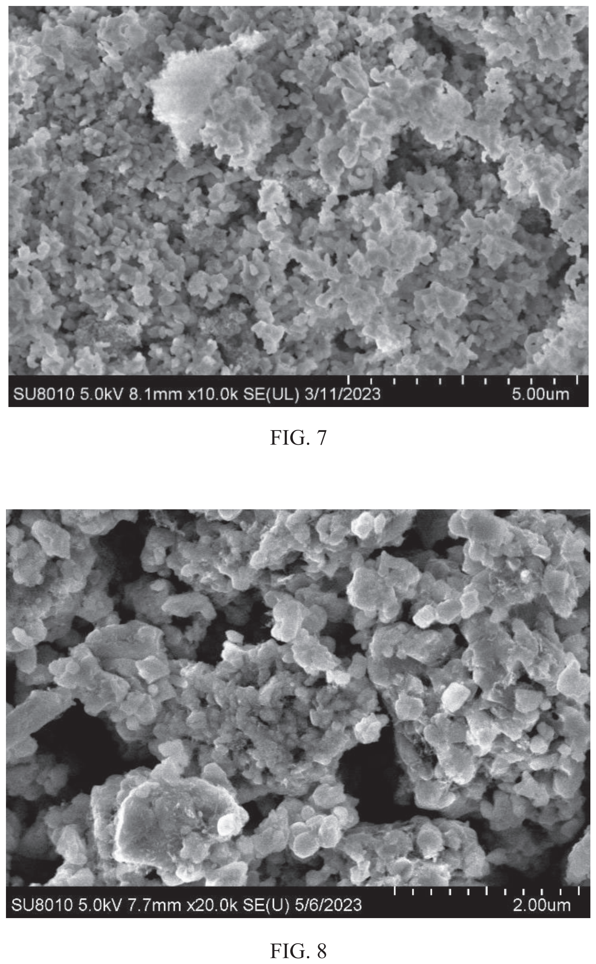

FIG. 5 is a SEM image of the composite positive electrode material in Example 1 of the present invention; FIG. 6 is a SEM image of the composite positive electrode material in Example 2 of the present application; FIG. 7 is a SEM image of the composite positive electrode material in Example 3 of the present application; and FIG. 8 is a SEM image of the composite positive electrode material in Comparative Example 1 of the present application. As can be seen from FIGS. 5-8, the composite positive electrode materials in the examples of the present application were connected via a carbon coating layer, while the composite positive electrode material in the comparative example had larger grain sizes and lacked a carbon coating layer.

### 3) BET Test

The BET of the composite positive electrode materials in the examples and comparative examples was measured using a N₂ adsorption BET tester.

### 4) Compaction density of composite positive electrode material

A cylindrical mold with a diameter of 13 mm was used, into which 2 g of the material was loaded and to which a pressure of 3 T was applied, to measure a thickness of the final sample, and then a compaction density of the material was calculated.

### 5) Atomic ratio of Fe to Na (Fe/Na) or atomic ratio of Fe to P (Fe/P)

XPS was used to test the composite positive electrode materials, to obtain an initial atomic ratio of Fe to Na (Fe/Na) or Fe to P (Fe/P) and a final stable atomic ratio of Fe to Na (Fe/Na) or Fe to P (Fe/P) in the composite positive electrode materials from outside to inside.

2. The following performance tests were performed on the batteries in the examples and comparative examples, and test results are shown in Table 2.

### 1) Charge-discharge specific capacity

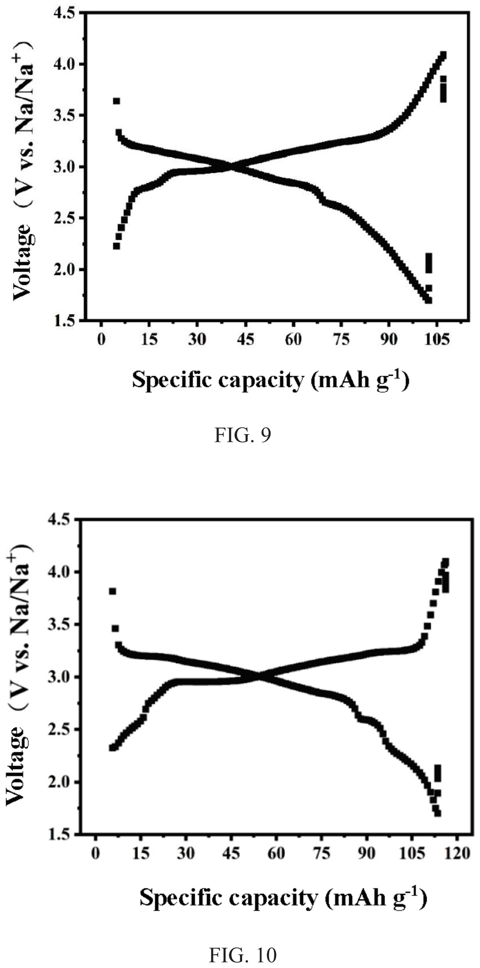

A charge-discharge voltage range of the batteries was 1.7-4.1 V, and a charge-discharge current density was 1C (1C = 129 mAh g⁻¹). The results are shown in Table 1 and FIGS. 9-12.

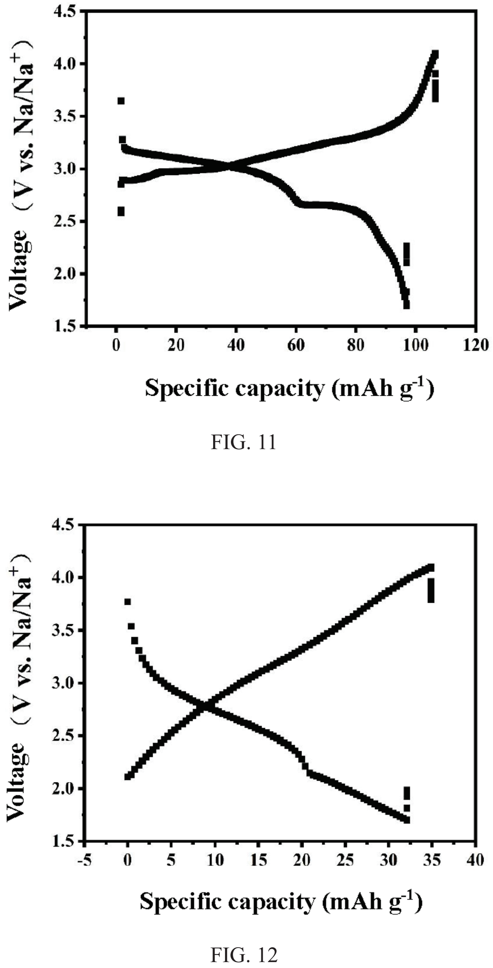

FIG. 9 is a charge-discharge curve of the battery in Example 1 of the present application; FIG. 10 is a charge-discharge curve of the battery in Example 2 of the present application; FIG. 11 is a charge-discharge curve of the battery in Example 3 of the present application; and FIG. 12 is a charge-discharge curve of the battery in Comparative Example 1 of the present application. As can be seen from FIGS. 9-12, the batteries in the examples of the present application exhibited excellent charge-discharge specific capacity.

### 2) Rate capability

The charge-discharge voltage range of the batteries was 1.7-4.1 V, and the rate was 5C. The test results are shown in Table 1.

### 3) Compaction density of electrode sheet

A dried positive electrode sheet was rolled at a set pressure, and was punched with a standard mold, then the punched electrode sheet was weighed and its thickness was measured. A compaction density of the rolled electrode sheet was calculated using the density formula by subtracting the thickness and weight of the aluminum foil.

### 4) Cycling performance

The batteries were subjected to a cycling test for 200 cycles at a rate of 5C at room temperature (25°C). A cycle retention rate was calculated by using an initial cycle capacity at 5C as a baseline.

**Table 1**

| | BET /m² g⁻¹ | Compac tion density / g cm⁻³ | Particle size of NaFePO₄ / nm | Carbon content / wt% | Molar ratio of PO₄⁴⁻ to P₂O₇⁴⁻ | Particle size of inner core / nm | Initial Fe/P or initial Fe/Na | Final Fe/P or final Fe/Na |
|---|---|---|---|---|---|---|---|---|
| Example 1 | 8.95 | 2.2 | 35.25 | 1.99 | 2.10:1 | 113.23 | 0.975 | 0.702 |
| Example 2 | 15.41 | 2.05 | 50.23 | 1.89 | 2.13:1 | 97.63 | 0.987 | 0.653 |
| Example 3 | 9.96 | 2.14 | 40.63 | 2.15 | 2.15:1 | 105.66 | 1.003 | 0.783 |
| Example 4 | 6.3 | 2.22 | 98.6 | 0.48 | 1.84:1 | 134.3 | 0.957 | 0.797 |
| Example 5 | 23.02 | 1.89 | 20.21 | 0.53 | 1.76:1 | 89.3 | 0.965 | 0.793 |
| Example 6 | 12.9 | 2.22 | 78.3 | 1.81 | 1.18:1 | 115.74 | 0.923 | 0.664 |
| Example 7 | 13.4 | 1.87 | 15.5 | 1.79 | 3.2:1 | 122.65 | 1.052 | 0.834 |
| Example 8 | 7.65 | 2.08 | 30.27 | 1.65 | 1.66:1 | 100.37 | 0.955 | 0.832 |
| Example 9 | 7.33 | 1.83 | 51.3 | 1.74 | 1.75:1 | 115.6 | 0.98 | 0.841 |
| Example 10 | 13.61 | 2.04 | 83.5 | 2.01 | 1.98:1 | 146.3 | 0.982 | 0.844 |
| Comparative Example 1 | 4.21 | 2.02 | 145.73 | - | 2.35:1 | 123.23 | 0.983 | 0.722 |
| Comparative Example 2 | 10.32 | 2.27 | 131.52 | 1.93 | 2.09:1 | 162.63 | 0.977 | 0.705 |

**Table 2**

| Item | 1C Charge capacity / mAh g⁻¹ | 1C Discharge capacity / mAh g⁻¹ | 5C Charge specific capacity / mAh g⁻¹ | 5C Discharge specific capacity / mAh g⁻¹ | Compaction density of electrode sheet / g cm⁻³ | Cycling performance / % |
|---|---|---|---|---|---|---|
| Example 1 | 108.5 | 104.6 | 96.8 | 96.2 | 2.40 | 99.7 |
| Example 2 | 118.8 | 113.8 | 103.2 | 103.1 | 2.33 | 98.3 |
| Example 3 | 103.8 | 98.1 | 95.3 | 95.2 | 2.39 | 99.8 |
| Example 4 | 92 | 88.2 | 82.5 | 76.8 | 2.37 | 98.6 |
| Example 5 | 98.7 | 97.4 | 96.1 | 95.3 | 1.93 | 95.3 |
| Example 6 | 92.3 | 90.6 | 80.2 | 79.3 | 2.21 | 99.9 |
| Example 7 | 89.2 | 84.3 | 78.6 | 72.8 | 2.16 | 95.4 |
| Example 8 | 117.6 | 112.6 | 104.2 | 104.7 | 2.34 | 99.7 |
| Example 9 | 97.1 | 94.2 | 93.5 | 88.7 | 2.6 | 96.3 |
| Example 10 | 93.6 | 91.3 | 89.1 | 83.2 | 2.1 | 96.7 |
| Comparative Example 1 | 35.1 | 32.4 | 13.2 | 13.0 | 2.45 | 93.2 |
| Comparative Example 2 | 65.3 | 64.2 | 23.6 | 22.1 | 2.46 | 95.8 |

As can be seen from Tables 1 and 2, when the composite positive electrode materials of the examples of the present application were used in batteries, they can improve the rate capability, cycling performance, and discharge specific capacity of the batteries.

Further, from Examples 1-11 and Comparative Example 1, it can be seen that by including the inner core and the carbon coating layer in the composite positive electrode material, the rate capability, cycling performance, and discharge specific capacity of the battery can be effectively improved. From Examples 1-11 and Comparative Example 2, it can be seen that only when the particle size of NaFePO₄ in the inner core was ≤100 nm, the obtained batteries exhibited more excellent rate capability, cycling performance, and discharge specific capacity.

From Example 1 and Examples 4-5, it can be seen that when the mass percentage content of the carbon coating layer in the composite positive electrode material was 0.5-5%, the obtained composite positive electrode material had a suitable BET and a suitable particle size of the inner core, and when it was applied to a battery, the obtained battery had more excellent rate capability, cycling performance and discharge specific capacity.

From Example 1 and Examples 6-7, it can be seen that in the composite positive electrode material, by selecting the molar ratio of PO₄³⁻ to P₂O₇⁴⁻, a composite positive electrode material with suitable compaction density can be obtained, and this composite positive electrode material can improve the rate capability, cycling performance, and discharge specific capacity of the battery.

From Example 1 and Example 8, it can be seen that when sodium ferric ethylenediaminetetraacetate (Sodium Ferric EDTA) is used as both the sodium source and the iron source in the preparation method, the rate capability, cycling performance, and discharge specific capacity of the battery can be further improved.

From Example 1 and Example 9, it can be seen that by performing two sand milling treatments, a composite positive electrode material with suitable compaction density can be obtained, and thus the rate capability, cycling performance, and discharge specific capacity of the battery were improved.

From Example 3 and Example 10, it can be seen that by including both an organic carbon source and an inorganic carbon source in the carbon source and selecting the mass ratio of the organic carbon source to the inorganic carbon source, the rate capability, cycling performance, and discharge specific capacity of the battery can be further improved.

Finally, it should be noted that the foregoing examples are merely intended to describe the technical solutions of the present application rather than limit the present application. Although the present application has been described in detail with reference to the foregoing examples, persons of ordinary skill in the art should understand that they may still make modifications to the technical solutions described in the foregoing examples or make equivalent substitutions to some or all technical features therein. However, these modifications or substitutions do not cause the essence of the corresponding technical solutions to depart from the scope of the technical solutions of the examples of the present application.

## Claims

1. A composite positive electrode material, comprising an inner core and a carbon coating layer covering at least part of a surface of the inner core and/or embedded in the inner core; wherein
the inner core comprises NaFePO₄ and a compound represented by Formula 1;
Na₄₊ₓFe_{3-y}(PO₄)_{2+z}P₂O₇ Formula 1;
in Formula 1, -0.15≤x≤0.8, 0≤y≤0.5, -0.2≤z≤0.2; and
a particle size of NaFePO₄ is ≤ 100 nm.

2. The composite positive electrode material according to claim 1, wherein an atomic ratio of Fe to P gradually decreases from (0.9-1.1):1 in the composite positive electrode material from outside to inside, and then stabilizes at (0.65-0.85):1; and/or,
an atomic ratio of Fe to Na gradually decreases from (0.9-1.1):1 in the composite positive electrode material from outside to inside, and then stabilizes at (0.65-0.85):1.

3. The composite positive electrode material according to claim 1 or 2, wherein a mass percentage content of the carbon coating layer is 0.5-5% based on a total mass of the composite positive electrode material.

4. The composite positive electrode material according to any one of claims 1-3, wherein a molar ratio of PO₄³⁻ to P₂O₇⁴⁻ in the composite positive electrode material is (1.2-2.5):1.

5. The composite positive electrode material according to any one of claims 1-4, wherein a particle size of the inner core is 100-900 nm; and/or,
a specific surface area of the composite positive electrode material is 5-20 m² g⁻¹; and/or,
a compaction density of the composite positive electrode material is 1.9-2.4 g cm^{- 3}.

6. A preparation method of the composite positive electrode material according to any one of claims 1-5, comprising
performing a sand milling treatment and a spray drying treatment in sequence on a raw material system comprising a sodium source, an iron source, a phosphorus source and a carbon source, to obtain a powder; and
performing a first calcination treatment, a second calcination treatment, a third calcination treatment and a fourth calcination treatment on the powder in sequence, to obtain the composite positive electrode material;
wherein in the raw material system, a molar proportion a of sodium element, a molar proportion b of iron element, and a molar proportion c of phosphorus element satisfy: 3.85≤a≤4.8; 2.5≤b≤3; and 3.8≤c≤4.2;
in the first calcination treatment, a temperature is 255-260°C and a time is 1-2 h;
in the second calcination treatment, a temperature is 300-320°C and a time is 3-5 h;
in the third calcination treatment, a temperature is 370-390°C and a time is 1-2 h; and
in the fourth calcination treatment, a temperature is 470-500°C and a time is 8-10 h.

7. The preparation method according to claim 6, wherein the sodium source and also the iron source and the carbon sources simultaneously contain sodium ferric ethylenediaminetetraacetate.

8. The preparation method according to claim 6 or 7, wherein the sand milling treatment comprises a first sand milling treatment and a second sand milling treatment; and
a particle size of a sand milling agent in the second sand milling treatment is smaller than a particle size of a sand milling agent in the first sand milling treatment.

9. The preparation method according to claim 8, wherein in the first sand milling treatment, a rotational speed is 900-1200 rpm and a time is 2-3 h; and/or,
in the second sand milling treatment, a rotational speed is 400-2000 rpm and a time is 1-2 h.

10. The preparation method according to any one of claims 6-9, wherein the carbon source comprises an organic carbon source.

11. The preparation method according to claim 10, wherein the carbon source further comprises an inorganic carbon source; and
a mass ratio of the organic carbon source to the inorganic carbon source is (12.5-30):1.

12. The preparation method according to claim 11, wherein the raw material system further comprises a coupling agent; and
a mass percentage content of the coupling agent is 1-3% based on a total mass of the raw material system.

13. The preparation method according to claim 12, wherein the coupling agent is a titanic acid ester coupling agent.

14. A battery, comprising the composite positive electrode material according to any one of claims 1-5.
